# EUROPEAN PATENT APPLICATION

(11) **EP 3 410 573 A1**
(43) Date of publication of application: **05.12.2018**
(21) Application number: 18175330.2
(22) Date of filing: 31.05.2018
(51) Int. Cl.: H02K 1/27, H02K 15/12

(54) **MOTOR**

(30) Priority: 02.06.2017 JP 2017109670
(71) Applicant: AISIN SEIKI KABUSHIKI KAISHA, Kariya-shi, Aichi-ken, 448-8650 (JP)
(72) Inventor: ABIKO, Jun, Kariya-shi, Aichi-ken, 448-8650 (JP); ASAHI, Kyohei, Kariya-shi, Aichi-ken, 448-8650 (JP)
(74) Representative: Cabinet Beau de Loménie

(57) **Abstract**

A motor (100) includes a rotor core (1) including a plurality of electromagnetic steel sheet portions (10) including a plurality of first electromagnetic steel sheet portions (10a), a plurality of permanent magnets (3), resin structure (4) provided to cover at least part of the rotor core (1) and cover each of the permanent magnets, the rotor core including an inner yoke portion (11) formed in an annular configuration and a plurality of outer yoke portions (12) arranged in a circumferential configuration at a radially outer side relative to the inner yoke portion, and each of the plurality of first electromagnetic steel sheet portions including a protruding portion (13) supporting a radially outward surface (3a) of each of the permanent magnets wherein the protruding portion supporting a vicinity of a circumferential end portion (3b) of the radially outward surface.

## Description

### TECHNICAL FIELD

This disclosure generally relates to a motor.

### BACKGROUND DISCUSSION

A motor including plural permanent magnets embedded in a rotor core is generally known (for example, refer to JP2014-36457A which will be hereinafter referred to as Patent reference 1).

A motor described in Patent reference 1 is provided with a rotor including a laminated core, plural magnets embedded in an inside of the laminated core and resin portion covering the laminated core and the magnets. The laminated core includes an inner core portion and plural outer core portions. The outer core portions and the magnets are arranged alternately with each other in a circumferential direction at a radially outer side relative to the inner core portion. Each of side surfaces of the outer core portions at the radially outer side and side surfaces of the magnets at the radially outer side is covered with outside resin of the resin portion. That is, the motor described in Patent reference 1 includes a structure in which the outside resin receives centrifugal force by the permanent magnets during rotation of the rotor.

Generally, resin is relatively low in mechanical strength and in durability against stress, compared to, for example, metal. Accordingly, the motor described in Patent reference 1 has inconvenience that the resin portion is deformed (distorted) when stress (centrifugal force) due to the permanent magnets is applied to the resin portion (for a predetermined time period or longer) when the motor is driven (when the rotor rotates). Thus, positions of the permanent magnets change from their initial positions (the positions approach the radially outer side). As a result, there arises a problem that an amount of flux linkage (an amount of magnetic flux passing through coil) varies, thereby generating pulsating torque.

A need thus exists for a motor which can suppress pulsation torque attributed to deformation (distortion) of resin structure which is caused by drive of the motor.

### SUMMARY

According to an aspect of this disclosure, a motor includes a rotor core including a plurality of electromagnetic steel sheet portions laminated with each other in a direction of a rotational axis, the electromagnetic steel sheet portions including a plurality of first electromagnetic steel sheet portions, a plurality of permanent magnets embedded in the rotor core and arranged in a circumferential configuration, a resin structure provided to cover at least part of the rotor core and to cover each of the permanent magnets, the rotor core including an inner yoke portion formed in an annular configuration and a plurality of outer yoke portions arranged in a circumferential configuration at a radially outer side relative to the inner yoke portion, each of the first electromagnetic steel sheet portions including a first inner yoke forming portion forming the inner yoke portion, and a plurality of first outer yoke forming portions respectively forming the plurality of outer yoke portions, each of the plurality of permanent magnets being arranged between the outer yoke portions which are arranged side by side to each other, and each of the plurality of first electromagnetic steel sheet portions including a protruding portion supporting a radially outward surface of each of the permanent magnets wherein the protruding portion supporting a vicinity of a circumferential end portion of the radially outward surface.

According to the above-described configuration, each of the plurality of first electromagnetic steel sheet portions includes the protruding portion supporting the radially outward surface of each of the permanent magnets wherein the protruding portion supporting the vicinity of the circumferential end portion of the radially outward surface. Thus, when the rotor core rotates, stress (centrifugal force) due to the permanent magnets can be received by the protruding portions. Accordingly, the stress applied to the resin structure that is at the radially outer side relative to the permanent magnets can be reduced, thereby restricting the resin structure from being deformed (distorted). As a result, the positions of the permanent magnets are restricted from changing (approaching the radially outer side) from their initial positions. In consequence, pulsating torque can be restricted from occurring.

In addition, according to the above-described configuration, the resin structure is restricted from being deformed (towards the radially outer side) due to the centrifugal force of the permanent magnets. Accordingly, it can be restricted that an air gap between the resin structure and member to be provided at a radially outer side relative to the resin structure reduces. As a result, it can be restricted that friction occurs between the resin structure and the member to be provided at the radially outer side relative to the resin structure.

In addition, according to the above-described configuration, the protruding portion is configured to support the radially outward surface of the permanent magnet wherein the protruding portion supports the vicinity of the circumferential end portion of the radially outward surface. Thus, compared to a case in which the protruding portion supports the whole of the radially outward surface of the permanent magnet, the magnetic flux can be restricted from leaking, via the protruding portion, to the neighboring first outer yoke forming portion. As a result, an amount of flux linkage (an amount of magnetic flux passing through coil) can be increased.

According to another aspect of this disclosure, the protruding portion includes a first protruding portion supporting the vicinity of the circumferential end portion of the radially outward surface of the permanent magnet wherein the first protruding portion supporting the vicinity of the circumferential end portion at one side in a circumferential direction, and the protruding portion includes a second protruding portion supporting the vicinity of the circumferential end portion of the radially outward surface of the permanent magnet wherein the second protruding portion supporting the vicinity of the circumferential end portion at the other side in the circumferential direction.

According to the above-described configuration, compared to a case in which the protruding portion is provided only at one side in the circumferential direction of the radially outward surface of the permanent magnet, the portion of the permanent magnet at the radially outer side can be received or supported in a more stable manner. As a result, it can be restricted easily that the centrifugal force due to the permanent magnet is applied to the resin structure.

According to another aspect of this disclosure, each of the first electromagnetic steel sheet portions includes a first connection portion connecting at least part of the plurality of first outer yoke forming portions and the first inner yoke forming portion to each other, and a crimped portion is provided at the first outer yoke forming portion to be positioned in a vicinity of the first connection portion, and is configured to fix the laminated electromagnetic steel sheet portions to each other.

According to the above-described configuration, the crimped portion is provided in the vicinity of the first connection portion, and thus the crimped portion can block the magnetic flux from flowing from the permanent magnet to the first connection portion. As a result, the magnetic flux can be restricted from leaking towards a side of the first inner yoke forming portion.

According to another aspect of this disclosure, the plurality of first outer yoke forming portions of the first electromagnetic steel sheet portions include a plurality of first portions connected to the first inner yoke forming portion by the first connection portions and a plurality of second portions which are not connected to the first inner yoke forming portion by the first connection portions, the first portion and the second portion are arranged alternately with each other in a circumferential direction, and the plurality of first electromagnetic steel sheet portions are laminated to each other in a manner that the first portion and the second portion are arranged alternately with each other in the direction of the rotational axis.

According to the above-described configuration, the plurality of first electromagnetic steel sheet portions are laminated to each other in a manner that the first portion and the second portion are arranged alternately with each other in the direction of the rotational axis. Since the first connection portions are not stacked onto each other consecutively in the direction of the rotational axis, it can be restricted that the magnetic flux leaks in the direction of the rotational axis via the first connection portions.

According to another aspect of this disclosure, the plurality of electromagnetic steel sheet portions includes a plurality of second electromagnetic steel sheet portions, each of the second electromagnetic steel sheet portions includes a second inner yoke forming portion forming the inner yoke portion, and a plurality of second outer yoke forming portions respectively forming the plurality of outer yoke portions, each of the plurality of second outer yoke forming portions of the second electromagnetic steel sheet portions is connected to the second inner yoke forming portion by a second connection portion, and the second outer yoke forming portions which are arranged side by side to each other are connected to each other by a third connection portion, and the plurality of second electromagnetic steel sheet portions are laminated with each other at both end portions of the rotor core in the direction of the rotational axis.

According to the above-described configuration, the plurality of second electromagnetic steel sheet portions each including the second connection portion and the third connection portion, and including a relatively high mechanical strength are laminated with each other at each axial end portion of the rotor core, and therefore a mechanical strength of the entire rotor core can be enhanced.

According to another aspect of this disclosure, a number of first electromagnetic steel sheet portions is larger than a number of second electromagnetic steel sheet portions.

According to the above-described configuration, the number of second electromagnetic steel sheet portions can be reduced to be relatively small, wherein the second outer yoke forming portions neighboring with each other are connected to each other, and the second inner yoke forming portion is connected to each of the plurality of the second outer yoke forming portions. As a result, the leakage of the magnetic flux is restricted between the outer yoke portions neighboring with each other, and between the inner yoke portion and each of the plurality of outer yoke portions. Consequently, an amount of leakage of the magnetic flux in the entire rotor core can be reduced.

According to another aspect of this disclosure, the rotor core includes a recessed portion provided at a radially outer side relative to the plurality of permanent magnets and filled with resin, and the resin filled in the recessed portion covers a portion of the radially outward surface of each of the plurality of permanent magnets wherein the portion is not supported by the protrusion.

According to the above-described configuration, the radially outward surface of each of the plurality of permanent magnets are prevented, by the resin (the resin structure) filled in the recessed portion, from being exposed outside. As a result, the resin can restrict the radially outward surface of each of the plurality of permanent magnets from being damaged.

According to another aspect of this disclosure, each of the plurality of outer yoke portions includes a insertion hole into which a positioning member is configured to be placed by insertion when the resin structure is being formed.

According to the above-described configuration, while the resin structure is being formed or molded, the positioning member placed by insertion in the insertion hole can restrict the plurality of outer yoke portions from being displaced due to pressure caused by the inflow of the resin. As a result, the rotor core can be formed in a desired shape and configuration (with desired dimensions).

According to another aspect of this disclosure, the resin structure includes an end surface arranged at one side in the direction of the rotational axis, and the end surface is provided with a plurality of gate marks formed due to inflow of resin when the resin structure is being formed, and a gap is provided between the inner yoke portion and each of the plurality of permanent magnets, the plurality of gate marks are arranged to overlap the gap when seen in the direction of the rotational axis.

According to the above-described configuration, the permanent magnets are restricted, by the protruding portions, from moving radially outwardly while the resin structure is being formed or molded. Accordingly, it can be easily restricted that the positions of the permanent magnets are displaced by pressure attributed to the inflow of the resin. As a result, the permanent magnets are arranged at desired positions after the resin molding.

According to another aspect of this disclosure, the rotor core includes a hole portion provided at a radially inner side relative to each of the plurality of permanent magnets and filled with resin, and a radially inward surface of each of the plurality of permanent magnets is covered with the resin filled in the hole portion.

According to the above-described configuration, there exists no gap between the radially inward surface of each of the plurality of permanent magnets and the resin (the resin structure) filled in the hole portion. Accordingly, the permanent magnets can be disposed or sandwiched, in the radial direction, between the protruding portions and the resin (the resin structure) filled in the hole portions. As a result, the permanent magnets can be easily restricted from moving in the radial direction.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a plan sectional view of a motor according to an embodiment disclosed here;
Fig. 2 is a perspective view of a rotor core according to the embodiment;
Fig. 3 is a plan view of a first electromagnetic steel sheet portions according to the embodiment;
Fig. 4 is an enlarged view of Fig. 3;
Fig. 5 is a plan view of a second electromagnetic steel sheet portions according to the embodiment;
Fig. 6 is a perspective view of the rotor core after resin molding according to the embodiment, which is seen from a side of a direction Z1;
Fig. 7 is a perspective view of the rotor core after the resin molding according to the embodiment, which is seen from a side of a direction Z2;
Fig. 8 is a plan view of the rotor core after the resin molding according to the embodiment, which is seen from a side of the direction Z2;
Fig 9 is a sectional view taken along line IX-IX of Fig. 8; and
Fig. 10 is a simulation result indicating relation between the number of rotations of a motor and a stress applied to a first connection portion of the embodiment disclosed here.

### DETAILED DESCRIPTION

An embodiment of the present disclosure will be described hereunder with reference to the drawings.

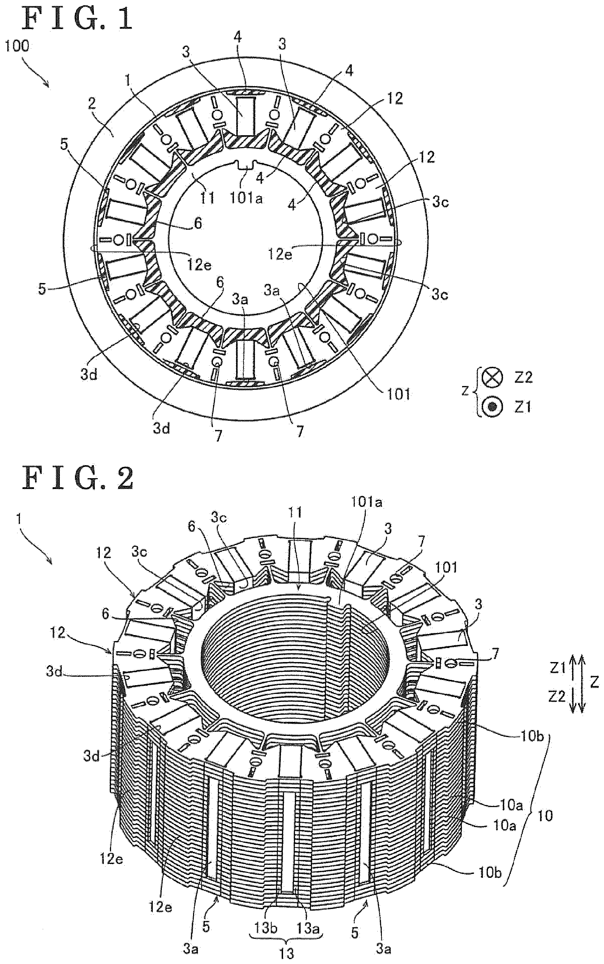

With reference to Figs. 1 to 10, a configuration of a motor 100 according to the embodiment will be described. In the present description, "a direction of a rotational axis" corresponds to a direction of a rotational axis of the motor 100 (a direction Z), and "a radial direction" corresponds to a radial direction of a rotor core 1.

The motor 100 is used, for example, for a linear motion actuator, a brake and 4WS (a four wheel steering system), however, the use of the motor 100 is not limited thereto.

(Structure of the motor) As illustrated in Fig. 1, the motor 100 includes the rotor core 1. The rotor core 1 is configured by plural electromagnetic steel sheet portions 10 (refer to Fig. 2) laminated to or stacked on each other in the direction of the rotational axis.

The rotor core 1 includes an inner yoke portion 11 formed in an annular or ring configuration. The rotor core 1 includes plural (in the embodiment, fourteen) outer yoke portions 12 arranged in an outer side in the radial direction relative to the inner yoke portion 11 such that the outer yoke portions 12 are arranged in a circumferential configuration. The inner yoke portion 11 and each of the outer yoke portions 12 are formed of the electromagnetic steel sheet portions 10 (refer to Fig. 2) that are laminated to each other. A shaft insertion hole 101 in which a shaft is configured to be inserted is provided in an inner side in the radial direction relative to the inner yoke portion 11. A protrusion 101a configured to engage with the shaft is provided at the shaft insertion hole 101 so as to protrude from an outer peripheral edge of the shaft insertion hole 101 towards an inner side in the radial direction.

The motor 100 includes a stator core 2 arranged to face the rotor core 1. The stator core 2 is arranged in the outer side in the radial direction relative to the rotor core 1. That is, the motor 100 is an inner-rotor-type motor.

The motor 100 includes plural (in the embodiment, fourteen) permanent magnets 3 embedded in the rotor core 1 to be circumferentially arranged at the rotor core 1. The plural permanent magnets 3 are arranged in a circumferential configuration. Each of the plural permanent magnets 3 is disposed between the outer yoke portions 12 which are arranged side by side to each other. Each of the permanent magnets 3 includes a rectangular shape of which the long side is extended along the radial direction when seen in the direction of the rotational axis. The permanent magnets 3 each of which includes an S pole arranged at one side and an N pole arranged at the other side in the circumferential direction, and the permanent magnets 3 each of which includes the N pole arranged at the one side and the S pole arranged at the other side in the circumferential direction are arranged alternately with each other.

As illustrated in Fig. 2, the plural electromagnetic steel sheet portions 10 include plural first electromagnetic steel sheet portions 10a and plural second electromagnetic steel sheet portions 10b.

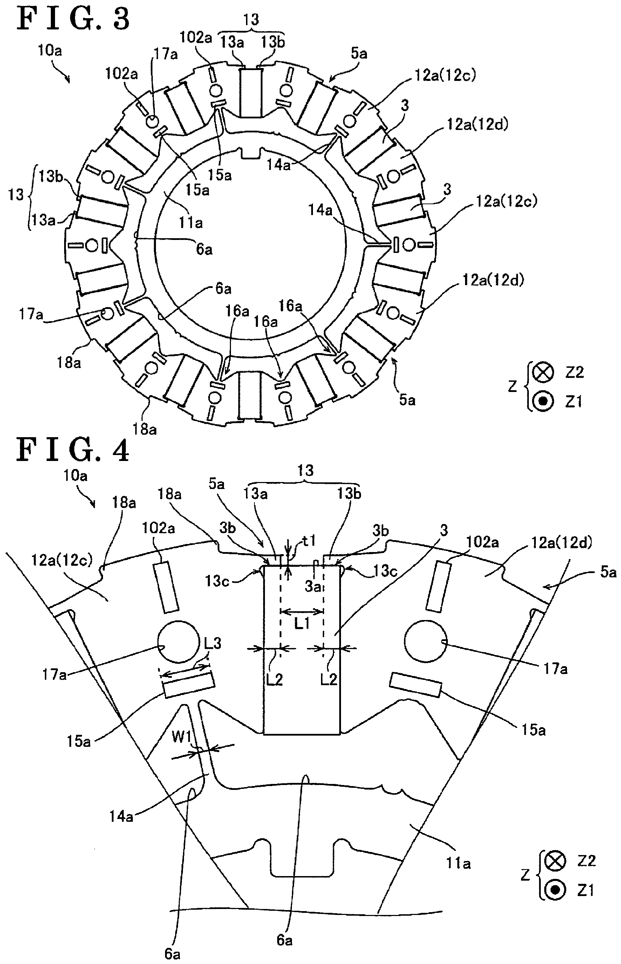

As illustrated in Figs. 3 and 4, each of the first electromagnetic steel sheet portions 10a includes an inner yoke forming portion 11a forming the inner yoke portion 11 (refer to Figs. 1 and 2), and plural outer yoke forming portions 12a respectively forming the plural outer yoke portions 12 (refer to Figs. 1 and 2). The inner yoke forming portion 11a and the outer yoke forming portions 12a are examples of "a first inner yoke forming portion" and "first outer yoke forming portions", respectively.

In the embodiment, each of the plural first electromagnetic steel sheet portions 10a includes a protruding portion 13 supporting a vicinity of a circumferential end portion 3b (refer to Fig. 4) of a radially outward surface 3a (refer to Fig. 4) of the permanent magnet 3 (refer to Fig. 4). The vicinity of the circumferential end portion includes both meanings of the position itself of the end portion, and the vicinity or neighborhood of the position of the end portion.

Specifically, as illustrated in detail in Fig. 4, the protruding portion 13 includes a first protruding portion 13a supporting the vicinity of the circumferential end portion 3b, at one side in the circumferential direction, of the radially outward surface 3a of the permanent magnet 3. The protruding portion 13 also includes a second protruding portion 13b supporting the vicinity of the circumferential end portion 3b, at the other side in the circumferential direction, of the radially outward surface 3a of the permanent magnet 3. Describing in detail, the first protruding portion 13a is arranged to face, in the radial direction, the vicinity of the circumferential end portion 3b at one side in the circumferential direction of the radially outward surface 3a of the permanent magnet 3. The second protruding portion 13b is arranged to face, in the radial direction, the vicinity of the circumferential end portion 3b, at the other side in the circumferential direction, of the radially outward surface 3a of the permanent magnet 3.

The first protruding portion 13a and the second protruding portion 13b are arranged to extend along the short side of the permanent magnet 3 such that the first protruding portion 13a and the second protruding portion 13b face or oppose each other. The first protruding portion 13a and the second protruding portion 13b are arranged such that a clearance including a length L1 is provided between the first protruding portion 13a and the second protruding portion 13b. The length L1 is longer than a length L2 (a length for which each of the first protruding portion 13a and the second protruding portion 13b, and the permanent magnet 3 face each other) of each of the first protruding portion 13a and the second protruding portion 13b. A thickness t1 of each of the first protruding portion 13a and the second protruding portion 13b in the radial direction is approximately a thickness of the electromagnetic steel sheet portion 10. A groove portion 5a including a substantially T-shape is provided at a radially outer side relative to the radially outward surface 3a of the permanent magnet 3. The groove portion 5a forms a recessed portion 5 (refer to Figs. 1 and 2) which will be described below.

A relief portion 13c for relieving a corner portion of the permanent magnet 3 is provided in a vicinity of each of the first protruding portion 13a and the second protruding portion 13b of each of the plural outer yoke forming portions 12a. The relief portion 13c is arranged to be next to a radially-outer-side corner portion of the permanent magnet 3.

Each of the first electromagnetic steel sheet portions 10a includes a connection portion 14a connecting part of the plural outer yoke forming portions 12a, and the inner yoke forming portion 11a to each other. Specifically, the outer yoke forming portions 12a include plural (in the embodiment, seven) first portions 12c and plural (in the embodiment, seven) second portions 12d (in the embodiment, seven of the first portions 12c and seven of second portions 12d). The first portions 12c are connected to the inner yoke forming portion 11a by means of the connection portions 14a. The second portions 12d are not connected to the inner yoke forming portion 11a by means of the connection portions 14a. The first portions 12c and the second portions 12d are arranged alternately with each other in the circumferential direction. The connection portion 14a includes a rod shape extended in the radial direction. The connection portion 14a is an example of "a first connection portion".

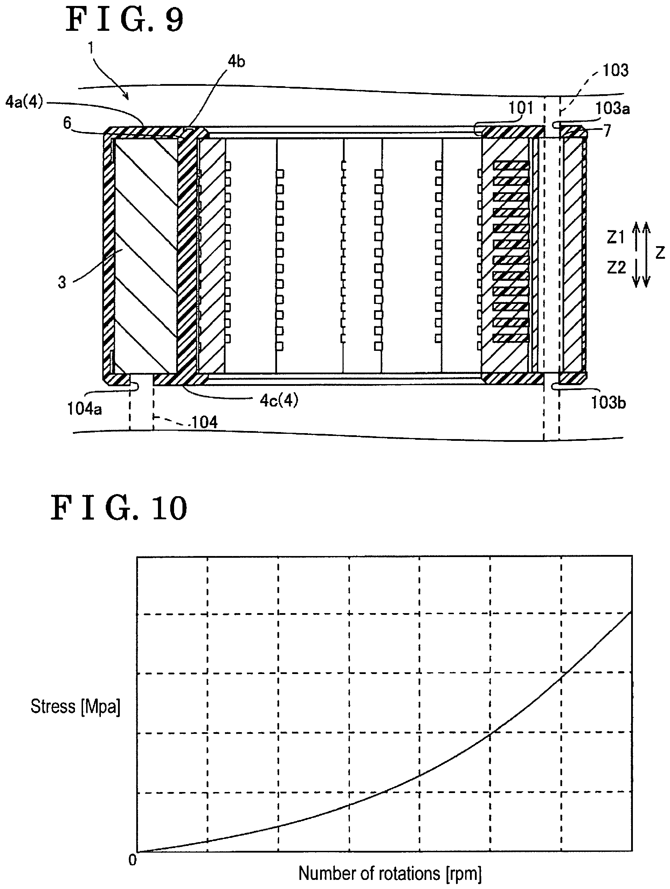

In the present embodiment, in a vicinity of the connection portion 14a at the outer yoke forming portion 12a, a crimped portion 15a is provided. The crimped portion 15a is for fixing the electromagnetic steel sheet portions 10, which are to be laminated to or stacked onto each other, to each other. Specifically, the crimped portion 15a includes a rectangular shape of which the short side is extended in the radial direction when seen in the direction of the rotational axis. The crimped portion 15a is arranged such that a center of the crimped portion 15a is positioned on an extended line of the connection portion 14a. A length L3 of the long side of the crimped portion 15a is longer than a width W1 of the connection portion 14a in the circumferential direction. As the rotor core 1 rotates, relatively large stress is applied to the connection portions 14a. However, a simulation result (refer to Fig. 10) is obtained which indicates that no problem arises in terms of strength if a rotational speed of the motor during driving of the motor is substantially at a predetermined rotational speed (for example, 6000 rpm).

The crimped portion 15a is provided at each of the first portions 12c that are connected by means of the connection portions 14a, and each of the second portions 12d that are not connected by means of the connection portions 14a.

A crimped portion 102a including a rectangular shape when seen in the direction of the rotational axis is provided at the outer side in the radial direction relative to the crimped portion 15a. The crimped portion 102a is provided such that the long side thereof is extended in the radial direction. The crimped portion 102a is arranged in a vicinity of an outer peripheral edge of the outer yoke forming portion 12a (the first portion 12c and the second portion 12d).

The first electromagnetic steel sheet portion 10a is provided with plural (in the embodiment, seven) opening portions 6a forming hole portions 6 (refer to Figs. 1 and 2) which will be described below. The opening portions 6a are provided between the inner yoke forming portion 11a and the outer yoke forming portions 12a. The plural opening portions 6a are arranged in a circumferential configuration. The connection portion 14a is provided between the opening portions 6a which are arranged side by side. Each of the plural opening portions 6a includes three recesses 16a provided at the radially outer side. The three recesses 16a are arranged at both circumferential end portions and the circumferential central portion of the opening portion 6a. The three recesses 16a are recessed towards the crimped portions 15a which are different from one another (that is, the three recesses 16a are recessed towards the respective crimped portions 15a which are arranged side by side to one another).

The first electromagnetic steel sheet portion 10a includes plural opening portions 17a forming respective insertion holes 7 (refer to Figs. 1 and 2) which will be described below. In the embodiment, fourteen of the opening portions 17a are provided. Each of the opening portions 17a is provided between the crimped portion 15a and the crimped portion 102a. The opening portion 17a includes a circular shape.

Each of the plural outer yoke forming portions 12a includes a corner portion 18a provided at a radially outward edge of the outer yoke forming portion 12a. The corner portion 18a includes an angle of substantially 90 degrees when seen from the direction of the rotational axis.

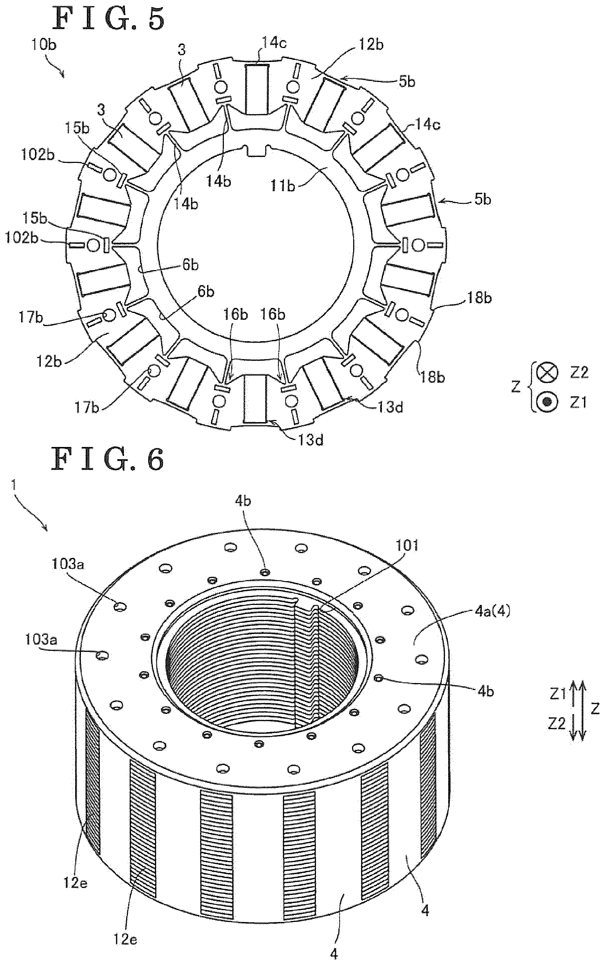

As illustrated in Fig. 5, the second electromagnetic steel sheet portion 10b includes an inner yoke forming portion 11b forming the inner yoke portion 11 (refer to Figs. 1 and 2), and plural (in the embodiment, fourteen) outer yoke forming portions 12b respectively forming the plural outer yoke portions 12 (refer to Figs. 1 and 2). The inner yoke forming portion 11b and the outer yoke forming portions 12b are examples of "a second inner yoke forming portion" and "second outer yoke forming portions", respectively.

Each of the plural outer yoke forming portions 12b of the second electromagnetic steel sheet portion 10b is connected to the inner yoke forming portion 11b by means of a connection portion 14b. The outer yoke forming portions 12b arranged side by side to each other are connected to each other by means of a connection portion 14c. That is, in the embodiment, similarly to the outer yoke forming portions 12b, fourteen of the connection portions 14b and fourteen of the connection portions 14c are provided. Each of the connection portion 14b includes the same shape as the connection portion 14a of the first electromagnetic steel sheet portion 10a. The connection portion 14c is provided to face the radially outward surface 3a (refer to Fig. 4) of the permanent magnet 3. The connection portion 14b and the connection portion 14c are examples of "a second connection portion" and "a third connection portion", respectively.

Each of the plural outer yoke forming portions 12b of the second electromagnetic steel sheet portion 10b includes a crimped portion 15b provided at a position corresponding to the crimped portion 15a. The crimped portion 15b includes the same shape as the crimped portion 15a. Each of the plural outer yoke forming portions 12b includes a crimped portion 102b provided at a position corresponding to the crimped portion 102a. The crimped portion 102b includes the same shape as the crimped portion 102a.

A groove portion 5b forming the recessed portion 5 (refer to Figs. 1 and 2) which will be described below is provided at the radially outer side of each of the plural connection portions 14c. That is, the groove portions 5a of the plural first electromagnetic steel sheet portions 10a and the groove portions 5b of the plural second electromagnetic steel sheet portions 10b are overlapped each other, thereby forming the recessed portion 5.

The second electromagnetic steel sheet portion 10b is provided with plural (in the embodiment, fourteen) opening portions 6b forming the hole portions 6 (refer to Figs. 1 and 2) which will be described below. The opening portions 6b are provided between the inner yoke forming portion 11b and the outer yoke forming portions 12b. That is, the opening portions 6a of the plural first electromagnetic steel sheet portions 10a and the opening portions 6b of the plural second electromagnetic steel sheet portions 10b are overlapped with each other, thereby forming the hole portions 6.

The plural opening portions 6b are arranged in a circumferential configuration. The connection portion 14b is provided between the opening portions 6b arranged side by side with each other. Each of the plural opening portions 6b includes two recesses 16b provided at the radially outer side. The two recesses 16b are arranged at both circumferential end portions. The two recesses 16b are recessed towards the crimped portions 15b which are different from each other (that is, the two recesses 16b are recessed towards the crimped portions 15b which are arranged side by side to each other).

The second electromagnetic steel sheet portion 10b includes plural (in the embodiment, fourteen) opening portions 17b forming the respective insertion holes 7 (refer to Figs. 1 and 2) which will be described below. The plural opening portions 17a (refer to Fig. 3) and the plural opening portions 17b are overlapped with each other, thereby forming the insertion holes 7.

The opening portions 17b are provided at positions corresponding to the opening portions 17a (refer to Fig. 3). The opening portions 17b is provided between the crimped portion 15b and the crimped portion 102b. The opening portion 17b includes the same size and the same shape as the opening portion 17a.

Each of the plural outer yoke forming portions 12b includes a corner portion 18b provided at a radially outward edge of the outer yoke forming portion 12b. The corner portions 18b are arranged at positions corresponding to the corner portions 18a (refer to Fig. 4) of the first electromagnetic steel sheet portions 10a. Similarly to the angle portion 18a, the corner portion 18b includes an angle of substantially 90 degrees when seen from the direction of the rotational axis.

Each of the plural outer yoke forming portions 12b includes a relief portion 13d for relieving the corner portion of the permanent magnet 3. The relief portions 13d are provided at positions corresponding to the relief portions 13c of the outer yoke forming portions 12a.

In the embodiment, as illustrated in Fig. 2, the plural second electromagnetic steel sheet portions 10b are laminated at both end portions of the rotor core 1 in the direction of the rotational axis. Specifically, at both end portions of the rotor core 1 in the direction of the rotational axis, plural (for example, three) second electromagnetic steel sheet portions 10b are laminated consecutively with each other. That is, in the rotor core 1, out of the electromagnetic steel sheet portions 10 laminated with each other, plural pieces at the uppermost layer and other plural pieces at the lowermost layer are the second electromagnetic steel sheet portions 10b.

The first electromagnetic steel sheet portions 10a are laminated consecutively with each other between the second electromagnetic steel sheet portions 10b provided at an end portion at one side (a side of the direction Z1) in the direction of the rotational axis of the rotor core 1 (that is, the second electromagnetic steel sheet portion 10b in the lowermost layer from among the plural second electromagnetic steel sheet portions 10b at the side of the direction Z1) and the second electromagnetic steel sheet portions 10b provided at an end portion at the other side (a side of a direction Z2 in the direction of the rotational axis of the rotor core 1 (that is, the second electromagnetic steel sheet portion 10b in the upper most layer from among the plural second electromagnetic steel sheet portions 10b at the side of the direction Z2).

In the embodiment, the plural first electromagnetic steel sheet portions 10a are laminated with each other such that the first portions 12c (refer to Fig. 3) and the second portions 12d (refer to Fig. 3) are arranged alternately with each other in the direction of the rotational axis. That is, the plural first electromagnetic steel sheet portions 10a are laminated such that the second portions 12d are arranged above and under the first portion 12c, and the first portions 12c are arranged above and under the second portion 12d. The first electromagnetic steel sheet portions 10a and the second electromagnetic steel sheet portions 10b are laminated or stacked in a progressive stamping working. In a metal die for the progressive stamping working, the first electromagnetic steel sheet portion 10a is sequentially stacked onto a surface of other first electromagnetic steel sheet portion 10a or onto a surface of the second electromagnetic steel sheet portion 10b, in a state where the first portions 12c and the second portions 12d are separated from one another.

In the embodiment, the number of first electromagnetic steel sheet portions 10a is larger than the number of second electromagnetic steel sheet portions 10b. For example, the number of the electromagnetic steel sheet portions 10a is four times the number of second electromagnetic steel sheet portions 10b. The ratio of the number of first electromagnetic steel sheet portions 10a and the number of second electromagnetic steel sheet portions 10b to each other is not limited thereto.

As illustrated in Fig. 1, the motor 100 includes a mold portion 4 provided to cover at least part of the rotor core 1, and the permanent magnets 3. The mold portion 4 is an example of "resin structure".

As illustrated in Figs. 1 and 2, the rotor core 1 includes the recessed portions 5 provided at the radially outer side relative to the plural permanent magnets 3. The recessed portions 5 is filled with resin, and thus the mold portion 4 (refer to Fig. 1) is provided.

In the embodiment, the radially outward surface 3a (refer to Fig. 2) of each of the plural permanent magnets 3 includes a portion which is not supported by the protruding portion 13 (refer to Fig. 2), and the portion that is not supported by the protruding portion 13 is covered with the resin (the mold portion 4 provided at the recessed portion 5 as illustrated in Fig. 1) filled in the recessed portion 5. That is, the surfaces 3a of the permanent magnets 3 which are exposed in Fig. 2 are to be covered by the mold portion 4 after resin molding is performed.

The rotor core 1 includes the hole portion 6 provided at the radially inner side relative to each of the plural permanent magnets 3. The hole portion 6 is filled with the resin, and thus the mold portion 4 is provided (refer to Fig. 1).

In the embodiment, a radially inward surface 3c of each of the plural permanent magnets 3 is covered with the resin (the mold portion 4 provided at the corresponding hole portion 6 in Fig. 1) filled in the corresponding hole portion 6. That is, the hole portion 6 is in communication with a magnet insertion hole 3d in which the permanent magnet 3 is to be placed by insertion. The entire surface of the radially inward surface 3c of the permanent magnet 3 is covered with the mold portion 4 provided at the hole portion 6.

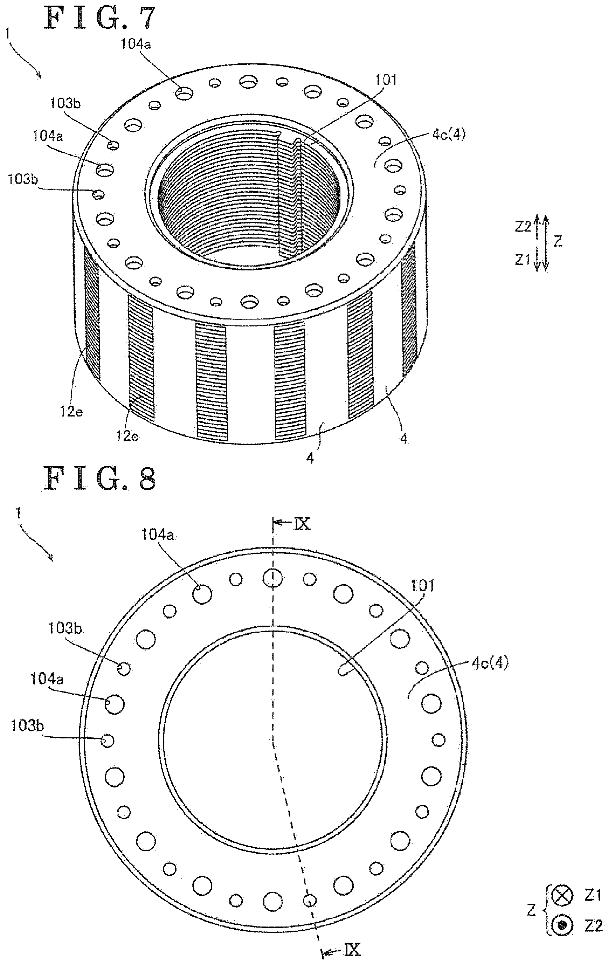

The mold portion 4 is provided to cover both end surfaces of the rotor core 1 in the direction of the rotational axis (refer to Figs. 6 and 7). The mold portion 4 is not provided at a radially outer side of a lateral surface 12e of each of the outer yoke portions 12, the lateral surface 12e which is provided to protrude radially outwardly. The lateral surface 12e corresponds to a surface formed by the plural first electromagnetic steel sheet portions 10a (the outer yoke forming portions 12a) and the plural second electromagnetic steel sheet portions 10b (the outer yoke forming portions 12b) which are laminated with each other.

In the embodiment, each of the plural outer yoke portions 12 includes the insertion hole 7 into which a positioning member 103 (refer to Fig. 9) is configured to be inserted when the mold portion 4 is formed or molded. Specifically, during the resin molding, the resin is poured into the die for the resin molding in a state where the positioning members 103 are placed in the insertion holes 7 by insertion.

As illustrated in Fig. 6, plural (in the embodiment, fourteen) gate marks 4b are formed at an end surface 4a (which serves as an end surface) of the mold portion 4 at one side (the side of the direction Z1) in the direction of the rotational axis. The gate marks 4b are formed due to gates of the die when the mold portion 4 is being molded. The plural gate marks 4b are provided on the end surface 4a to be arranged with equal angular intervals in a circumferential configuration.

In the embodiment, each of the plural gate marks 4b is arranged to overlap the gap provided between the inner yoke portion 11 (refer to Figs. 1 and 2) and each of the plural permanent magnets 3 (refer to Figs. 1 and 2) when seen in the direction of the rotational axis. Specifically, when seen in the direction of the rotational axis, the plural gate marks 4b are arranged to overlap the plural hole portions 6 (refer to Figs. 1 and 2), respectively.

The end surface 4a of the mold portion 4 includes plural opening portions 103a formed due to the resin molding during which the positioning members 103 (refer to Fig. 9) are placed by insertion in the insertion holes 7 (refer to Figs. 1 and 2). That is, when seen in the direction of the rotational axis, the plural opening portions 103a are arranged at positions which overlap the plural insertion holes 7, respectively. The opening portions 103a are provided on the end surface 4a to be arranged with equal angular intervals in a circumferential configuration.

As illustrated in Figs. 7 and 8, plural (in the embodiment, fourteen) opening portions 103b are provided at the other end surface 4c of the mold portion 4 at the other side (the side of the direction Z2). The opening portions 103b are formed because the positioning members 103 are placed by insertion in the insertion holes 7 during the resin molding. That is, the plural opening portions 103b are arranged to overlap the respective plural opening portions 103a when seen in the direction of the rotational axis. Each of the opening portions 103a and the opening portions 103b includes a circular shape.

The other end surface 4c is provided with plural (in the embodiment, fourteen) insertion holes 104a into which supporting members 104 (refer to Fig. 9) for supporting or holding the permanent magnets 3 during the molding of the mold portion 4 are respectively inserted. That is, by inserting the supporting member 104 into the insertion hole 104a, an end portion of the supporting member 104 is in contact with an end surface of the permanent magnet 3. At the molding of the mold portion 4, by inserting the supporting members 104 into the respective insertion holes 104a while the other end surface 4c facing downward, the permanent magnets 3 can be restricted from moving in the direction of the rotational axis (from moving downwardly).

Each of the insertion holes 104a is arranged between the opening portions 103b which are arranged side by side to each other. The insertion hole 104a includes a circular shape. A diameter of the insertion hole 104a is larger than a diameter of the opening portion 103a (the opening portion 103b).

(Method of forming the mold portion) As illustrated in Fig. 9, in a state where the positioning member 103 (indicated with dotted lines) is placed by insertion in the insertion hole 7 and the supporting member 104 (indicated with other dotted lines) is placed by insertion in the insertion hole 104a, the resin is poured in a resin-molding die where the rotor core 1 is accommodated. At this time, the resin is poured from the gates of the die in a state where any clearance is not provided between the resin-molding die and the lateral surfaces 12e (refer to Fig. 2) of the outer yoke portions 12 of the rotor core 1, and a clearance is provided between each end surface of the rotor core 1 in the direction of the rotational axis and the resin-molding die (that is, a state in which parting portions exist at the outer diameter portion or the outer circumferential portion). By performing the resin molding in the state in which the parting portions exist at the outer diameter portion, it can be restricted that the axial end portions of the permanent magnets 3 and the resin-molding die are in contact with each other even if a length of the permanent magnet 3 in the direction of the rotational axis is longer than a length of the rotor core 1 in the direction of the rotational axis. Accordingly, the permanent magnets 3 can be prevented from being damaged at the resin-molding. In addition, there is no need to reduce the length of the permanent magnet 3 in the direction of the rotational axis in order to prevent the permanent magnet 3 from being in contact with the die. That is, the length of the permanent magnet 3 in the direction of the rotational axis can be increased, thereby increasing an amount of magnetic flux of the rotor core 1. Fig. 9 illustrates a state in which the mold portion 4 has been formed.

(Effects of the embodiment) In the embodiment, the following effects can be obtained.

In the embodiment, as described above, the motor 100 is configured such that each of the plural first electromagnetic steel sheet portions 10a includes the protruding portion 13 supporting the vicinity of the circumferential end portion 3b of the radially outward surface 3a of the permanent magnet 3. Thus, when the rotor core 1 is rotating, the stress (the centrifugal force) due to the permanent magnets 3 can be received by the protruding portions 13. Accordingly, the stress applied to the mold portion 4 that is at the radially outer side relative to the permanent magnets 3 can be reduced, thereby restricting the mold portion 4 from being deformed (distorted). As a result, it can be restricted that the positions of the permanent magnets 3 from changing from their initial positions (approaching the radially outer side) from their initial positions. In consequence, pulsating torque can be restricted from occurring.

As the mold portion 4 is restricted from being deformed (radially outwardly) by the centrifugal force of the permanent magnets 3, it can be restricted that an air gap between the mold portion 4 and the stator core 2 reduces. As a result, it can be restricted that friction occurs between the mold portion 4 and the stator core 2.

The protruding portions 13 is configured such that the protruding portion 13 supports the vicinity of the circumferential end portion 3b of the radially outward surface 3a of the permanent magnet 3. Thus, the magnetic flux can be restricted from leaking via the protruding portion 13 to the neighboring outer yoke forming portion 12a compared to a case where the protruding portion 13 supports the entire radially outward surface 3a of the permanent magnet 3. As a result, an amount of flux linkage (an amount of magnetic flux passing through the coil) can be increased.

In the embodiment, as described above, the motor 100 is configured such that the protruding portion 13 includes the first protruding portion 13a supporting the vicinity of the circumferential end portion 3b at circumferential one side of the radially outward surface 3a of the permanent magnet 3, and the second protruding portion 13b supporting the vicinity of the circumferential end portion 3b at the circumferential other side of the radially outward surface 3a of the permanent magnet 3. Thus, a radially outward portion of the permanent magnet 3 can be received more stably compared to a case where the protruding portion 13 is provided only at circumferential one side of the radially outward surface 3a of the permanent magnet 3. As a result, it can be restricted easily that the centrifugal force due to the permanent magnets 3 is applied to the mold portion 4.

In the embodiment, as described above, the motor 100 is configured such that the crimped portion 15a for fixing the electromagnetic steel sheet portions 10 that are to be laminated to each other is provided in the vicinity of the connection portion 14a of the outer yoke forming portions 12a. Thus, since the crimped portion 15a is arranged near the connection portion 14a, the crimped portion 15a can intercept the magnetic flux from flowing from the permanent magnet 3 to the connection portion 14a. As a result, it can be restricted that the magnetic flux leaks towards the inner yoke forming portion 11a.

In the embodiment, as described above, the motor 100 includes the configuration where the plural first electromagnetic steel sheet portions 10a are laminated with each other in a manner that the first portions 12c and the second portions 12d are arranged alternately with each other in the direction of the rotational axis. Thus, because the connection portions 14 are not laminated consecutively in the direction of the rotational axis, it can be restricted that the magnetic flux leaks in the direction of the rotational axis $via the connection portions 14.

In the embodiment, as described above, the motor 100 is configured such that the plural second electromagnetic steel sheet portions 10b are laminated to each other at each end portion of the rotor core 1 in the direction of the rotational axis. Thus, since the plural second electromagnetic steel sheet portions 10b each including the connection portion 14b and the connection portion 14c, and including a relatively high mechanical strength are laminated at each end portion of the rotor core 1 in the direction of the rotational axis, a mechanical strength of the entire rotor core 1 can be enhanced.

In the embodiment, as described above, the motor 100 is configured such that the portion of each of the radially outward surfaces 3a of each of the plural permanent magnets 3, wherein the portion is not supported by the protruding portion 13, is covered with the resin filled in the recessed portion 5. Thus, owing to the resin (the mood portion 4) filled in the recessed portion 5, the radially outward surface 3a of each of the plural permanent magnets 3 is not exposed outside. As a result, the resin (the mold portion 4) can restrict the radially outward surface 3a of each of the plural permanent magnets 3 from being damaged.

In the embodiment, as described above, the motor 100 is configured such that each of the plural outer yoke portions 12 is provided with the insertion hole 7 in which the positioning member 103 is inserted at a time of the molding of the molding portion 4. Thus, the positioning member 103 placed by insertion in the insertion hole 7 can restrict the plural outer yoke portions 12 from being displaced due to pressure caused by the inflow of the resin during the molding of the mold portion 4. As a result, the rotor core 1 can be formed in a desired shape and configuration (in desired dimensions).

In the embodiment, as described above, when viewed in the direction of the rotational axis, the motor 100 is configured such that each of the plural gate marks 4b is arranged to overlap the gap provided between the inner yoke portion 11 and each of the plural permanent magnets 3. Thus, the permanent magnets 3 are restricted, by the protruding portions 13, from moving radially outwardly during the molding of the mold portion 4. Accordingly, it can be easily restricted that the positions of the permanent magnets 3 are displaced by the pressure attributed to the inflow of the resin. As a result, after the resin molding, the permanent magnets 3 are arranged at desired positions.

In the embodiment, as described above, the motor 100 is configured such that the number of first electromagnetic steel sheet portions 10a is larger than the number of second electromagnetic steel sheet portions 10b. Accordingly, the number of second electromagnetic steel sheet portions 10b can be relative small, wherein the outer yoke forming portions 12b which are arranged side by side to each other are connected to each other, and the inner yoke forming portion 11b and each of the plural outer yoke forming portions 12b are connected to each other. As a result, the leakage of the magnetic flux is restricted between the outer yoke portions 12 which are arranged side by side, and between the inner yoke forming portion 11 and each of the plural outer yoke portions 12. Consequently, an amount of leakage of the magnetic flux can be reduced at the entire rotor core 1.

In the embodiment, as described above, the motor 100 is configured such that the radially inward surface 3c of each of the plural permanent magnets 3 is covered with the resin filled in the corresponding hole portion 6. Thus, there exists no gap between the radially inward surface 3c of each of the plural permanent magnets 3 and the resin (the mold portion 4) filled in the hole portion 6. Accordingly, the permanent magnets 3 are sandwiched, in the radial direction, between the protruding portions 13 and the resin (the mold portion 4) filled in the hole portions 6. As a result, the permanent magnets 3 can be easily restricted from moving in the radial direction.

(Modified examples) The embodiment disclosed here is an example and is not restrictive in all respects. The scope of the invention is indicated in the scope of claims but not in the description of the aforementioned embodiment. Further, the scope of the invention includes all the changes and modifications (modified examples) that are within meanings and ranges which are equivalent to the scope of claims.

For example, in the aforementioned embodiment, the example is described in which the outer yoke forming portions 12a (examples of the first outer yoke forming portions) of the first electromagnetic steel sheet portion include the first portions and the second portions, however, the disclosure is not limited thereto. For example, the outer yoke forming portions 12a (examples of the first outer yoke forming portions) of the first electromagnetic steel sheet portion may include only the first portion.

In the aforementioned embodiment, the example is described in which, at the first electromagnetic steel sheet portion, the first portion and the second portion of the outer yoke forming portion 12a (an example of the first outer yoke forming portion) are arranged alternately with each other in the circumferential direction, however, the disclosure is not limited thereto. For example, the first portions (the second portions) may be arranged at every several second portions (the first portions).

In the aforementioned embodiment, the example is described in which the plural first electromagnetic steel sheet portions and the plural second electromagnetic steel sheet portions are laminated thereby to form the rotor core, however, the disclosure is not limited thereto. For example, the rotor core may include the electromagnetic steel sheet portion in which the inner yoke forming portion is not connected to any of the plural outer yoke forming portions. In addition, for example, if any of the electromagnetic steel sheet portions includes the protruding portion, the rotor core may include the electromagnetic steel sheet portion which is not provided with the protruding portion or the connection portion 14c (an example of the third connection portion).

In the aforementioned embodiment, the example is described in which the plural electromagnetic steel sheet portions include the first electromagnetic steel sheet portions and the second electromagnetic steel sheet portions, however, the disclosure is not limited thereto. For example, the plural electromagnetic steel sheet portions may be formed only of the first electromagnetic steel sheet portions.

In the aforementioned embodiment, the example is described in which the plural second electromagnetic steel sheet portions are provided at both end portions of the rotor core in the direction of the rotational axis, however, the disclosure is not limited thereto. For example, the plural second electromagnetic steel sheet portions may be provided at one end portion of the rotor core in the direction of the rotational axis.

In the aforementioned embodiment, the example is described in which the plural second electromagnetic steel sheet portions are provided at both end portions of the rotor core in the direction of the rotational axis, however, the disclosure is not limited thereto. For example, one second electromagnetic steel sheet portion may be provided at each of the end portions of the rotor core in the direction of the rotational axis.

In the aforementioned embodiment, the example is described in which each of the outer yoke forming portions 12a (examples of the first outer yoke forming portions) of the first electromagnetic steel sheet portion includes the protruding portion, however, the disclosure is not limited thereto. For example, the protruding portion may be provided at part of the plural outer yoke forming portions 12a (examples of the first outer yoke forming portions).

In the aforementioned embodiment, the example is described in which the first protruding portion 13a and the second protruding portion 13b are provided at the outer yoke forming portion 12a (an example of the first outer yoke forming portion), however, the disclosure is not limited thereto. For example, either one of the first protruding portion 13a or the second protruding portion 13b may be provided at the outer yoke forming portion 12a (an example of the first outer yoke forming portion).

In the aforementioned embodiment, the example is described in which the crimped portion is provided in the vicinity of the connection portion 14a (an example of the first connection portion), however, the disclosure is not limited thereto. For example, the opening portion 17a may be provided in the vicinity of the connection portion 14a (an example of the first connection portion).

In the aforementioned embodiment, the example is described in which the crimped portion 15b is provided in the vicinity of the connection portion 14b (an example of the second connection portion), however, the disclosure is not limited thereto. For example, the opening portions 17b may be provided in the vicinity of the connection portion 14b (an example of the second connection portion).

## Claims

1. A motor (100) comprising:
a rotor core (1) including a plurality of electromagnetic steel sheet portions (10) laminated with each other in a direction of a rotational axis, the electromagnetic steel sheet portions (10) including a plurality of first electromagnetic steel sheet portions (10a);
a plurality of permanent magnets (3) embedded in the rotor core (1) and arranged in a circumferential configuration;
a resin structure (4) provided to cover at least part of the rotor core (1) and cover each of the permanent magnets (3);
the rotor core (1) including an inner yoke portion (11) formed in an annular configuration and a plurality of outer yoke portions (12) arranged in a circumferential configuration at a radially outer side relative to the inner yoke portion (11);
each of the first electromagnetic steel sheet portions (10a) including a first inner yoke forming portion (11a) forming the inner yoke portion (11), and a plurality of first outer yoke forming portions (12a) respectively forming the plurality of outer yoke portions (12);
each of the plurality of permanent magnets (3) being arranged between the outer yoke portions (12) which are arranged side by side to each other; and
each of the plurality of first electromagnetic steel sheet portions (10a) including a protruding portion (13) supporting a radially outward surface (3a) of each of the permanent magnets (3) wherein the protruding portion (13) supporting a vicinity of a circumferential end portion (3b) of the radially outward surface (3a).

2. The motor according to claim 1, wherein
the protruding portion (13) includes a first protruding portion (13a) supporting the vicinity of the circumferential end portion (3b) of the radially outward surface (3a) of the permanent magnet (3) wherein the first protruding portion (13a) supporting the vicinity of the circumferential end portion (3b) at one side in a circumferential direction, and
the protruding portion (13) includes a second protruding portion (13b) supporting the vicinity of the circumferential end portion (3b) of the radially outward surface (3a) of the permanent magnet (3) wherein the second protruding portion (13b) supporting the vicinity of the circumferential end portion (3b) at the other side in the circumferential direction.

3. The motor according to either claim 1 or 2, wherein
each of the first electromagnetic steel sheet portions (10a) includes a first connection portion (14a) connecting at least part of the plurality of first outer yoke forming portions (12a) and the first inner yoke forming portion (11a) to each other, and
a crimped portion (15a) is provided at the first outer yoke forming portion (12a) to be positioned in a vicinity of the first connection portion (14a), and is configured to fix the laminated electromagnetic steel sheet portions (10) to each other.

4. The motor according to claim 3, wherein
the plurality of first outer yoke forming portions (12a) of the first electromagnetic steel sheet portions (10a) include a plurality of first portions (12c) connected to the first inner yoke forming portion (11a) by the first connection portions (14a), and a plurality of second portions (12d) which are not connected to the first inner yoke forming portion (11a) by the first connection portions (14a),
the first portion (12c) and the second portion (12d) are arranged alternately with each other in a circumferential direction, and
the plurality of first electromagnetic steel sheet portions (10a) are laminated to each other in a manner that the first portion (12c) and the second portion (12d) are arranged alternately with each other in the direction of the rotational axis.

5. The motor according to any one of claims 1 to 4, wherein
the plurality of electromagnetic steel sheet portions (10) includes a plurality of second electromagnetic steel sheet portions (10b),
each of the second electromagnetic steel sheet portions (10b) includes a second inner yoke forming portion (11b) forming the inner yoke portion (11), and a plurality of second outer yoke forming portions (12b) respectively forming the plurality of outer yoke portions (12),
each of the plurality of second outer yoke forming portions (12b) of the second electromagnetic steel sheet portions (10b) is connected to the second inner yoke forming portion (11b) by a second connection portion (14b), and the second outer yoke forming portions (12b) which are arranged side by side to each other are connected to each other by a third connection portion (14c), and
the plurality of second electromagnetic steel sheet portions (10b) are laminated with each other at both end portions of the rotor core (1) in the direction of the rotational axis.

6. The motor according to claim 5, wherein
a number of first electromagnetic steel sheet portions (10a) is larger than a number of second electromagnetic steel sheet portions (10b).

7. The motor according to any one of claims 1 to 6, wherein
the rotor core (1) includes a recessed portion (5) provided at a radially outer side relative to the plurality of permanent magnets (3) and filled with resin, and
the resin filled in the recessed portion (5) covers a portion of the radially outward surface (3a) of each of the plurality of permanent magnets (3) wherein the portion is not supported by the protrusion (13).

8. The motor according to any one of claims 1 to 7, wherein
each of the plurality of outer yoke portions (12) includes a insertion hole (7) into which a positioning member (103) is configured to be placed by insertion when the resin structure (4) is being formed.

9. The motor according to any one of claims 1 to 8, wherein
the resin structure (4) includes an end surface (4a) arranged at one side in the direction of the rotational axis, and the end surface (4a) is provided with a plurality of gate marks (4b) formed due to inflow of resin when the resin structure (4) is being formed, and
a gap is provided between the inner yoke portion (11) and each of the plurality of permanent magnets (3), the plurality of gate marks (4b) are arranged to overlap the gap when seen in the direction of the rotational axis.

10. The motor according to any one of claims 1 to 9, wherein
the rotor core (1) includes a hole portion (6) provided at a radially inner side relative to each of the plurality of permanent magnets (3) and filled with resin, and
a radially inward surface (3c) of each of the plurality of permanent magnets (3) is covered with the resin filled in the hole portion (6).
